# FASCICULE DE BREVET EUROPEEN

(11) **EP 2 946 994 B1**
(45) Date de publication et mention de la délivrance du brevet: **04.07.2018**
(21) Numéro de dépôt: 15167375.3
(22) Date de dépôt: 12.05.2015
(51) Int. Cl.: B62K 27/04, B62B 5/00, B62B 7/12, B62K 27/06, B62K 27/08, B62K 27/12, B62K 27/00, B60D 1/167, B60D 1/00, B62B 1/12, B62B 3/02

(54) **REMORQUE POUR VÉHICULE À DEUX ROUES**
ANHÄNGER FÜR ZWEIRAD-FAHRZEUG
TRAILER FOR TWO-WHEELED VEHICLE

(30) Priorité: 19.05.2014 FR 1454435
(43) Date de publication de la demande: 25.11.2015
(73) Titulaire: Pourty, Maxime, 75012 Paris (FR)
(72) Inventeur: Pourty, Maxime, 75012 Paris (FR)
(74) Mandataire: Fragnaud, Aude

(56) Documents cités:
- BE-A- 482 042
- DE-A1- 10 257 932
- DE-U1-202013 102 988
- JP-U- 3 180 446
- US-A- 4 037 853
- US-A- 4 342 467
- US-B1- 8 636 094

## Description

L'invention porte sur une remorque pour véhicule à deux roues, notamment pour bicyclette. Cette remorque est destinée en particulier, mais non exclusivement, au transport de colis, ou encore au transport de personnes par exemple.

Les remorques pour bicyclettes sont, d'une manière générale, connues. Les plus répandues, conçues notamment pour le transport d'enfants, comprennent une caisse portée par deux roues et attachée à la tige de selle de la bicyclette. Une telle remorque est par exemple décrite dans le document EP1 580 111.

D'autres modèles de remorques comprennent une seule roue montée à l'arrière du châssis, le châssis étant lui-même attaché à la tige de selle par l'intermédiaire d'un manchon. Une telle remorque est par exemple décrite dans le document US8, 636, 094.

Ces remorques sont basses et permettent de transporter des petites charges ou des enfants. Cependant, elles ne sont pas adaptées pour transporter des colis destinés à être empilés les uns sur les autres, ou des charges lourdes, ni pour transporter des personnes adultes.

Dans le domaine de la livraison de colis ou de charges lourdes, comme dans le domaine du transport de personnes, on préfère en général utiliser des triporteurs, encore dénommés tricycles. Un tel engin comprend deux roues qui portent la charge et qui sont situées soit à l'arrière soit à l'avant du véhicule. La caisse, destinée à contenir la charge et supportée par les deux roues arrière, ou avant, peut alors présenter une hauteur relativement importante, par exemple de l'ordre de 1,80m, sans que cela ne gêne la stabilité du triporteur. La caisse est donc dans ce cas solidaire du véhicule et ne peut pas être détachée. Un triporteur présente ainsi l'avantage d'une capacité accrue en termes de charge, au détriment de son encombrement, notamment de sa largeur, et de sa maniabilité.

Le document JP-U-3 180 446 décrit une remorque pliable pour véhicule à deux roues. La remorque comprend deux roulettes rétractables qui permettent d'assurer la stabilité de la remorque lorsque celle-ci est dételée du véhicule. Une telle remorque doit être entièrement vidée de son chargement pour être repliée.

Le document BE-A-482 042 décrit également une remorque repliable pour véhicule à 2 roues, comprenant des parois latérales qui se rabattent sur le châssis de la remorque. Chaque roue de la remorque est montée sur un axe raccordé à une paroi latérale par le biais d'une liaison pivotante, de sorte que lorsque les parois latérales sont rabattues, l'axe supportant chaque roue peut pivoter afin que les roues s'effacent dans le rectangle formé par le châssis et les parois rabattues. Une telle remorque doit également être entièrement vidée de son chargement pour être repliée.

Le document US 4 037 853 décrit une remorque apte à être tractée par une bicyclette ou à la main grâce à une barre d'attelage articulée entre une position de fixation sur la bicyclette et une position de tige rigide permettant de la tracter à la main.

L'invention a donc pour but de remédier à au moins un des inconvénients de l'art antérieur. En particulier, l'invention vise à proposer une remorque adaptée au transport de charges lourdes et/ou de personnes qui soit maniable, qui s'adapte à tout type de véhicule à deux roues et dont l'encombrement, notamment sa largeur, peut être modulé afin de pouvoir stocker facilement la remorque et son chargement dans un local quelconque.

A cet effet, l'invention a pour objet une remorque pour véhicule à deux roues, ladite remorque comprenant une caisse supportée par un châssis comportant lui-même un essieu équipé de deux roues en regard l'une de l'autre selon une direction transverse de ladite remorque, et de quatre amortisseurs situés respectivement de part et d'autre de chaque roue, ladite remorque étant caractérisée en ce qu'elle comprend en outre quatre roulettes rétractables, chaque roulette étant montée sur un axe mobile en translation verticale entre une première position relevée, lorsque la remorque est tractée par ledit véhicule à deux roues, et une deuxième position abaissée, en contact avec le sol, lorsque la remorque n'est pas tractée par ledit véhicule à deux roues et en ce que, lorsque les roulettes sont en position abaissée en contact avec le sol, leur position est telle que les roues de l'essieu ne touchent pas le sol, permettant une utilisation de la remorque en mode chariot.

Ainsi, lorsque la remorque est détachée du véhicule à deux roues, les quatre roulettes rétractables permettent de stabiliser la remorque et de faciliter son déplacement en la poussant comme un chariot, la rendant ainsi très maniable. De même, lorsque la remorque et le véhicule tracteur sont immobilisés, deux des quatre roulettes rétractables peuvent être abaissées pour permettent de stabiliser la remorque.

Selon d'autres caractéristiques optionnelles de la remorque :
- chaque roulette est de préférence située à un angle de ladite remorque ;
- l'axe mobile en translation verticale supportant chaque roulette est relié à une bielle elle-même reliée à un levier d'actionnement mobile en rotation autour d'un axe ;
- chaque roue est montée sur un train mobile en translation transversale, de sorte que l'écartement entre les deux roues varie entre une première position déployée, dans laquelle les deux roues sont écartées de part et d'autre de ladite caisse, et une deuxième position escamotée dans laquelle chaque roue est escamotée dans un logement prévu dans chaque paroi latérale de ladite caisse. Ainsi, lorsque les roues sont en position escamotée, l'encombrement de la remorque est significativement réduit, ce qui permet de faire passer la remorque dans des encadrements de porte standards et de stocker un nombre important de remorques côte à côte dans une pièce de type local commercial, et non plus dans un garage par exemple.
- en position déployée, chaque train mobile est libre en rotation autour d'un axe s'étendant selon une direction longitudinale du châssis ;
- de préférence, cet axe est confondu avec l'axe médian du châssis ;
- en positon escamotée, les trains mobiles sont maintenus solidaires d'une portion centrale fixe du châssis par l'intermédiaire d'au moins une tige de maintien ;
- pour passer d'une position déployée à une position escamotée et inversement, les deux amortisseurs de chaque roue sont reliés entre eux par une barre d'actionnement montée pivotante autour d'un axe ; et des moyens de rappel élastiques exercent une force de rappel sur ledit axe afin de maintenir les roues dans leur position escamotée ou déployée ;
- pour passer d'une position déployée à une position escamotée et inversement, les deux amortisseurs de chaque roue sont reliés entre eux par une barre d'actionnement montée pivotante autour d'un axe, et la tige de chaque train mobile coulisse dans la partie centrale équipée de galets et est maintenue en position horizontale au moyen d'une fourchette équipée d'un galet sur lequel appuie la tige ;
- la remorque comprend en outre un système d'attelage audit véhicule à deux roues, ledit système d'attelage pivotant autour de deux axes de rotation entre une position rangée le long de la paroi verticale avant de la caisse et une position déployée, lesdits axes de rotation étant à une hauteur située respectivement de part et d'autre de la hauteur du point de fixation sur le véhicule à deux roues ;
- le système d'attelage comprend : une structure porteuse comportant des montants verticaux et maintenue verticale le long de la paroi avant de la caisse ; une flèche formée de deux montants latéraux dotés chacun d'une rainure et reliés entre eux à une première extrémité par une tête d'attelage et à une autre extrémité par un axe ; une tringle de verrouillage montée pivotante autour d'un axe fixé à la structure porteuse et apte à être déployée vers le haut avec la barre d'attelage, ladite tringle de verrouillage se plaçant entre les montants latéraux de ladite flèche et étant en outre pourvue d'une rainure centrale ; une barre équerre formée par deux montants latéraux disposés de part et d'autre des montants latéraux de la flèche et reliés entre eux, à une première extrémité, par un axe de rotation fixé à la structure porteuse et, à une deuxième extrémité, par un axe de maintien passant à travers la rainure pratiquée dans chacun des montants latéraux de la flèche et dans la rainure de la tringle de verrouillage, de sorte que la barre d'attelage, la barre équerre et la tringle de verrouillage sont montées solidaires les unes des autres ; un moyen de verrouillage, fixé sur la tringle de verrouillage, apte à s'accrocher sur l'axe de maintien pour maintenir la flèche en position déployée ;
- le système d'attelage comprend : une structure porteuse comportant des montants verticaux et maintenue verticale le long de la paroi avant de la caisse, une flèche formée d'une barre dont une extrémité comprend une tête d'attelage, une tringle de verrouillage montée pivotante autour d'un axe fixé à la structure porteuse et apte à être déployée vers le haut avec la flèche, ladite tringle de verrouillage comprenant des montants latéraux disposés de part et d'autre de la flèche et pourvus d'une rainure centrale, une barre équerre formée par deux montants latéraux disposés de part et d'autre de la flèche et reliés entre eux, à une première extrémité, par un axe de rotation fixé à la structure porteuse et, à une deuxième extrémité, par un axe de maintien passant à travers la rainure pratiquée dans chacun des montants latéraux de la tringle de verrouillage, la flèche coulissant sur un galet supporté par ledit axe de maintien, de sorte que la flèche, la barre équerre et la tringle de verrouillage sont montées solidaires les unes des autres, un moyen de verrouillage, fixé sur la tringle de verrouillage, apte à s'accrocher sur l'axe de maintien pour maintenir la flèche en position déployée ;
- le moyen de verrouillage est fixé le long de la (des) rainure(s) de la tringle de verrouillage et sa position est réglable et adaptée à la hauteur d'accroche sur ledit véhicule à deux roues ;
- la structure porteuse du système d'attelage est fixée en un point bas médian de la caisse sur un axe autour duquel la structure porteuse est libre en rotation, et une rainure pratiquée dans la partie haute de chacun des montants verticaux de la structure porteuse permet de faire coulisser la structure porteuse le long d'une barre de manutention lorsqu'elle pivote autour de son axe ;
- la remorque comprend en outre un système d'amortissement apte à maintenir la structure porteuse du système d'attelage perpendiculaire au sol ;
- ce système d'amortissement comprend au moins un moyen de rappel élastique reliant la structure porteuse du système d'attelage à la caisse ;
- la flèche agit, à son extrémité arrière, sur un système de freinage par inertie ;
- la remorque est en outre équipée d'un frein à commande manuelle agissant sur le système de freinage par inertie ;
- chaque roulette est équipée d'un système de blocage individuel.

D'autres particularités et avantages de l'invention apparaitront à la lecture de la description suivante faite à titre d'exemple illustratif et non limitatif, en référence aux Figures annexées qui représentent :
- la Figure 1, une vue de profil de la remorque selon l'invention lorsqu'elle est attelée à un véhicule à deux roues,
- la Figure 2, une vue de profil de la remorque de la Figure 1, lorsqu'elle est dételée du véhicule à deux roues et utilisée comme un chariot,
- la Figure 3, un schéma en perspective de la remorque en position de tractage,
- la Figure 4, un schéma en perspective de la remorque en position chariot,
- les Figures 5A et 5B, des schémas du châssis de la remorque vu de face, dont les roues sont respectivement escamotées et déployées,
- les Figures 5C et 5D, des schémas en perspective du châssis de la remorque, dont les roues sont respectivement escamotées et déployées,
- les Figures 6A et 6B, une vue de face d'un système d'actionnement d'une roulette en position respectivement relevée et abaissée,
- la Figure 6C, une vue de profil du même système d'actionnement d'une roulette en position relevée,
- les Figures 7A et 7B, des schémas d'un système d'attelage de la remorque respectivement en position de tractage et en position de freinage,
- la Figure 8, un schéma d'un frein à commande manuelle,
- les Figures 9A à 9C, une vue de face d'un système d'actionnement d'une roulette selon un autre mode de réalisation, respectivement en position relevée, en position intermédiaire et en position abaissée,
- les Figures 10A et 10B, respectivement une vue en perspective et une vue de face du châssis de la remorque selon une variante de réalisation, et dont les roues sont déployées,
- les Figures 11A et 11B, des schémas en perspective d'un système d'attelage de la remorque selon une variante de réalisation,
- la Figure 11C, un schéma en perspective d'un moyen de verrouillage du système d'attelage des Figures 11A et 11B.

Sur toutes les Figures, les mêmes signes de référence sont utilisés pour désigner les mêmes éléments.

Dans la suite de la description, on entend par « véhicule à deux roues » tout type de véhicule à deux roues, électriquement assisté ou non, ou motorisé ou non.

On entend par « direction verticale » ou « hauteur » de la remorque, une direction selon un axe perpendiculaire au sol.

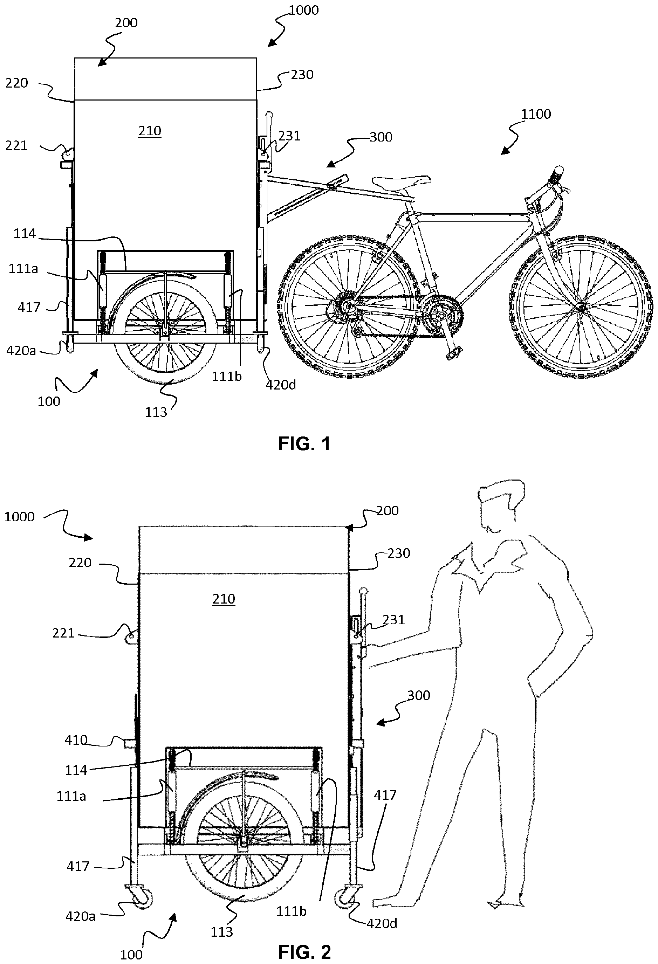

On entend par « caisse », la boîte destinée à contenir la charge. La caisse est elle-même supportée par un châssis. Elle comprend des parois verticales, s'étendant dans une direction perpendiculaire au sol. Plus particulièrement, la caisse comprend une « paroi avant », située en regard du véhicule à deux roues, et munie d'un système d'attelage pour l'accrocher au véhicule, une « paroi arrière », opposée à la paroi avant et située la plus en arrière selon la direction d'avancement du véhicule. Enfin, la caisse comprend deux « parois latérales » situées en regard l'une de l'autre et reliant les parois avant et arrière. Bien sûr, même s'il n'est pas représenté sur les schémas des Figures 1 à 8, on comprend que la caisse est dotée d'un système d'ouverture pour pouvoir y introduire la charge.

On entend par « direction transverse » une direction parallèle au sol et selon la largeur de la remorque, c'est-à-dire selon une direction perpendiculaire aux deux parois latérales.

On entend par « direction longitudinale » une direction parallèle au sol et selon la longueur de la remorque, c'est-à-dire selon une direction perpendiculaire aux parois avant et arrière.

La Figure 1 représente une vue de profil de la remorque 1000 selon l'invention attelée à une bicyclette 1100. La Figure 2 représente cette même remorque 1000 également vue de profil lorsqu'elle est détachée de la bicyclette et utilisée en tant que chariot.

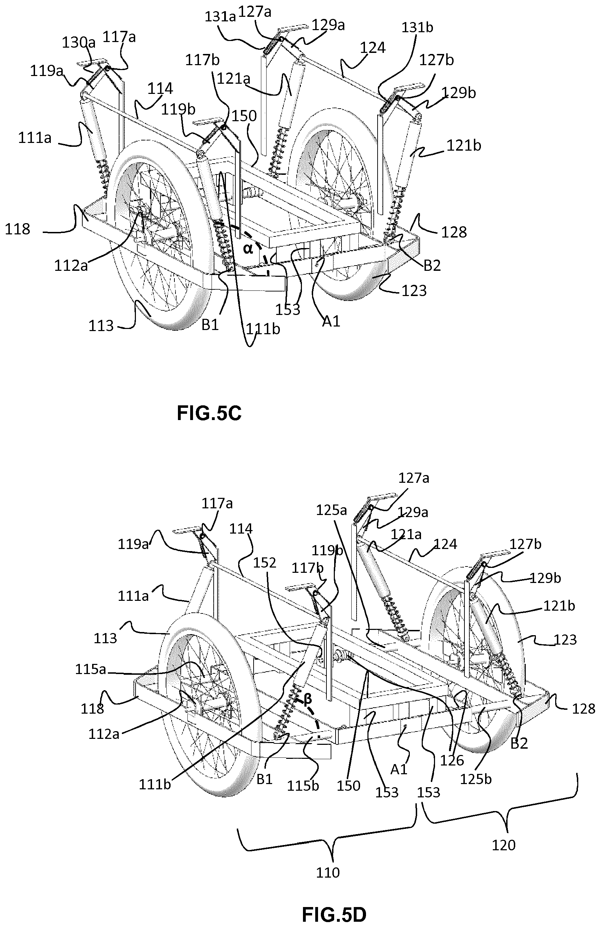

Cette remorque comprend une caisse 200 renfermant la charge à déplacer. Cette caisse 200 est supportée par un châssis 100 comprenant un essieu. L'essieu est équipé de deux roues, en regard l'une de l'autre selon une direction transverse de ladite remorque, et de quatre amortisseurs, respectivement 111a, 111b et 121a, 121b disposés deux à deux selon une direction longitudinale, respectivement de part et d'autre de chaque roue 113, 123 (voir notamment les Figures 5C et 5D).

De manière avantageuse, cette remorque comprend en outre au moins deux roulettes rétractables 420. Chaque roulette étant montée sur un axe 417 mobile en translation verticale entre une première position relevée, lorsque la remorque est tractée par ledit véhicule à deux roues, et une deuxième position abaissée, en contact avec le sol, lorsque la remorque n'est pas tractée par ledit véhicule à deux roues. Ce cas peut notamment se présenter lorsque la remorque est dételée du véhicule à deux roues et utilisée en chariot ou lorsque la remorque est maintenue attelée au véhicule à deux roues mais à l'arrêt.

Lorsque la remorque comporte deux roulettes rétractables, ce qui ne rentre pas dans le cadre de l'invention revendiquée, celles-ci sont disposées aux deux angles avant (références 420c, 420d sur les Figures 1 à 4) ou aux deux angles arrière (références 420a, 420b sur les Figures 1 à 4) de la remorque. Dans ce cas, la stabilité de la remorque en mode chariot est assurée par les deux roulettes rétractables 420a, 420b ou 420c, 420d en position descendue et les deux roues 113, 123 de l'essieu. De plus, lorsque la remorque doit franchir une marche, telle qu'une bordure de trottoir par exemple, la présence des deux roulettes avant 420c, 420d, par exemple, permet alors de limiter les efforts nécessaires à son élévation. En effet, lorsque les roues sont en appui contre la marche, la remorque bascule vers l'avant sous l'effet de la traction, et son poids est alors déplacé sur les deux roulettes avant. Sous l'effet d'une traction orientée vers le bas, la remorque bascule alors autour de son nouveau point d'appui, c'est - à - dire les roulettes, permettant ainsi de faciliter le franchissement de l'obstacle formé par la marche.

Selon l'invention, la remorque comprend quatre roulettes rétractables 420a, 420b, 420c, 420d disposées à chaque angle de la remorque. Dans ce cas, lorsque les quatre roulettes sont en position abaissée en contact avec le sol, leur position est telle que les deux roues 113, 123 de l'essieu ne touchent pas le sol. Ainsi, la stabilité de la remorque utilisée en mode chariot est uniquement assurée par les quatre roulettes rétractables en position abaissée. Le chariot est alors très maniable et déplacé par simple poussée ou traction grâce aux roulettes 420a, 420b, 420c, 420d montées pivotantes autour de leur axe 417. Une barre de manutention 221, 231 est par exemple disposée sur chacune des parois avant et arrière, afin de faciliter la prise en main de la remorque pendant son déplacement. Les quatre roulettes sont donc abaissées de sorte qu'elles soulèvent la remorque au point de décoller les roues principales de l'essieu et de les rendre libres. Le fait de pouvoir libérer les roues, permet alors non seulement de faciliter leur réparation, par exemple dans le cas d'une crevaison, mais aussi de réduire à zéro la résistance due au frottement contre le sol lors de l'escamotage des roues décrit infra.

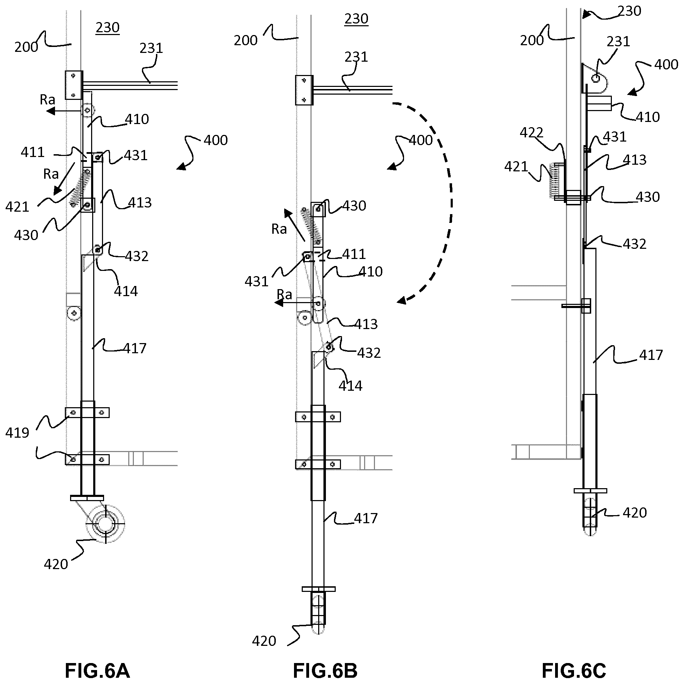

Le système 400 d'actionnement de chacune des roulettes rétractables 420a, 420b, 420c, 420d est schématisé plus en détails sur les Figures 6A à 6C. Les Figures 6 A et 6B représentent le système d'actionnement 400 d'une roulette lorsque celle-ci se trouve en position respectivement relevée et abaissée, le système étant vu d'une paroi avant ou arrière. La Figure 6C quant à elle, représente le même système d'actionnement lorsque la roulette se trouve en position relevée, le système étant vu de profil, c'est-à-dire d'une paroi latérale.

Chaque roulette rétractable 420a, 420b, 420c, 420d est de préférence montée sur un axe vertical 417, mobile en translation verticale. Cet axe 417 peut présenter une section carrée ou ronde par exemple. La deuxième extrémité de cet axe vertical 417 est raccordée à une bielle 413 par l'intermédiaire d'un élément de liaison rigide 414. Cet élément de liaison 414 peut être fixé à l'axe vertical par tout moyen connu, tel que par soudure, vissage ou collage par exemple. Il peut aussi faire partie intégrante de l'axe vertical 417 et être réalisé lors de la fabrication de ce-dernier. La bielle 413 est elle- même raccordée à un levier d'actionnement 410 par l'intermédiaire d'un autre élément de liaison 411. Cet élément de liaison 411 (en pointillés sur les Figures 6A, 6B) peut être fixé au levier d'actionnement 410 par tout moyen connu, tel que par soudure, vissage ou collage par exemple. Il peut aussi faire partie intégrante du levier d'actionnement 410 et être réalisé lors de la fabrication de ce-dernier. Le levier d'actionnement 410 est mobile autour d'un axe de rotation 430. Lorsque le levier d'actionnement 410 est abaissé, selon la flèche en pointillés sur la Figure 6B, il pivote autour de son axe de rotation 430. Il pivote également autour d'un axe 431 par rapport à la bielle 413. La bielle 413 est entrainée en mouvement et tourne autour d'un axe 432 par rapport à l'axe vertical 417. La bielle est alors descendue et dans une position inclinée par rapport à la paroi de la caisse. Dans son mouvement, la bielle entraine vers le bas l'axe 417 supportant la roulette. La roulette 420 est alors abaissée. L'axe 417 est maintenu le long de la paroi de la caisse 200 par un guide 419 dans lequel il coulisse. Le guide 419 peut être réalisé par tout moyen connu. Le levier d'actionnement 410 est par ailleurs solidaire d'une pièce 422 (voir Figure 6C), placée à l'intérieur de la caisse 200 et fixée sur l'axe de rotation 430 du levier 410. Un moyen de rappel élastique 421, tel qu'un ressort par exemple, est fixé à cette pièce 422. Une première extrémité du moyen de rappel élastique 421 est fixée sur l'axe de rotation 430 du levier 410, tandis que l'autre extrémité est fixée sur un autre point de la pièce 422. Ce moyen de rappel élastique 421 est donc fixé sur la pièce 422 et situé à l'intérieur de la caisse 200, invisible depuis l'extérieur. Il exerce alors une force de rappel Ra sur l'axe de rotation 430 du levier d'actionnement 410, de sorte qu'il maintient le levier d'actionnement 410 dans sa position, que cette position soit relevée ou abaissée (voir les forces exercées sur le levier schématisées par les flèches Ra sur les Figures 6A et 6B).

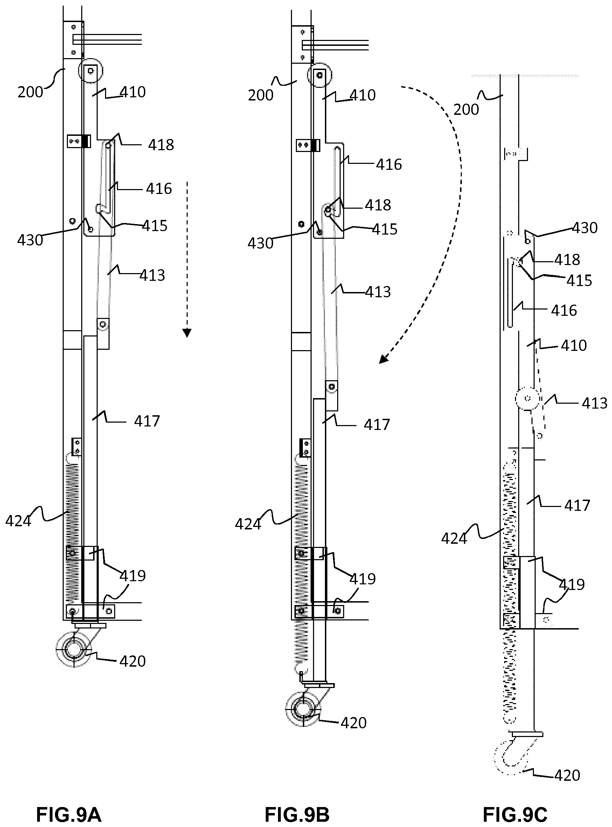

Les Figures 9A à 9C représentent une variante préférée du système d'actionnement de chacune des roulettes rétractables 420a, 420b, 420c, 420d. Selon cette variante, chaque roulette 420 est montée sur l'axe 417 mobile en translation entre trois positions : une première position relevée (voir Figure 9A), une deuxième position intermédiaire (voir Figure 9B) selon laquelle la roulette est abaissée dans une position située à quelques centimètres du sol (typiquement entre 2 et 8 cm du sol), et une troisième position (voir Figure 9C) abaissée en contact avec le sol et telle que, lorsque les quatre roulettes sont dans cette position abaissée, elles permettent de soulever la remorque de sorte que les roues 113, 123 de l'essieu ne touchent pas le sol. La position intermédiaire permet de réduire le mouvement du bras de levier et de réduire ainsi la force nécessaire pour soulever la remorque. Selon cette variante, la bielle 413 comprend un ergot 418 mobile en translation dans une rainure 416 pratiquée dans une paroi du levier d'actionnement 410. En position relevée, un moyen de rappel élastique, tel qu'un ressort 424, maintient la bielle 413 en position haute. Lorsque l'utilisateur souhaite abaisser la roulette 420, il abaisse la bielle 413 en translation, selon la flèche en pointillés sur la Figure 9A, de sorte que l'ergot 418 vienne se fixer dans une encoche 415 prévue à l'extrémité inférieure de la rainure 416 et située proximité de l'axe de rotation 430 du levier d'actionnement 410. Dans ce cas, la bielle est abaissée par un mouvement de translation dans une position intermédiaire selon laquelle la roulette 420 se trouve à quelques centimètres du sol, typiquement entre 2 et 8 cm. Le levier d'actionnement 410 est ensuite abaissé selon la flèche en pointillés sur la Figure 9B et pivote autour de son axe de rotation 430. L'axe vertical 417 supportant la roulette 420 est à nouveau abaissé, et le mouvement du levier 410 suffit alors pour que les quatre roulettes 420a à 420d abaissées sur le sol, puissent soulever la remorque.

Chaque roulette 420a, 420b, 420c, 420d est montée pivotante autour de son axe 417 pour faciliter le déplacement de la remorque lorsqu'elle est utilisée en mode chariot. Chaque roulette est de préférence équipée de son propre système de blocage individuel, commandé par le pied. Lorsqu'il est nécessaire d'utiliser un frein de parking, pour qu'un livreur puisse quitter son véhicule et livrer un colis par exemple, le livreur choisira, selon l'inclinaison de la route par exemple, d'abaisser deux ou quatre roulettes et il commandera le système de blocage de chacune des roulettes abaissées pour pourvoir bloquer la remorque.

De manière avantageuse, lorsque les quatre roulettes sont abaissées, pour utiliser la remorque en mode chariot, les deux roues 113, 123 de l'essieu ne touchant pas le sol, elles sont alors de préférence escamotées dans un logement 214a, 214b prévu dans chaque paroi latérale 210a, 210b de la remorque, de sorte qu'en mode chariot, la remorque présente une largeur réduite par rapport à la remorque tractée, et donc un encombrement réduit. Grâce au fait que les roues de l'essieu ne touchent pas le sol, leur escamotage s'en trouve facilité puisqu'il ne subit aucune résistance due au frottement avec le sol.

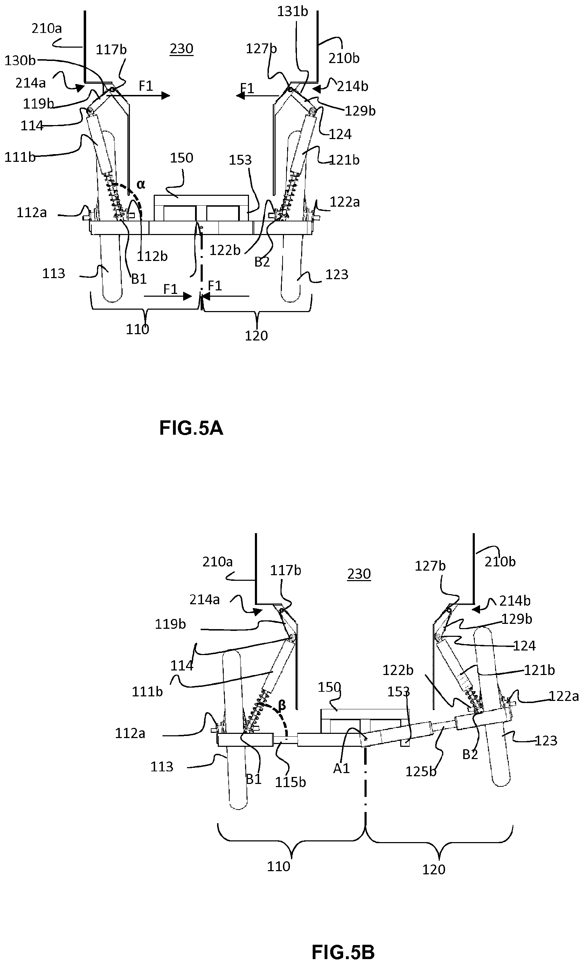

Les Figures 5A et 5B schématisent le châssis 100 de la remorque, vu de face, c'est à dire vu par la face avant 230, et les Figures 5C et 5D représentent un schéma de ce même châssis 100 vu en perspective. Ce châssis 100 comprend une partie centrale fixe 150, dotée de montants verticaux 153. Le châssis comprend en outre un essieu dont l'empâtement varie entre une première position déployée, schématisée sur les Figures 5B et 5D, et une position escamotée, schématisée sur les Figures 5A et 5C. Pour cela, chaque roue 113, 123 de l'essieu est montée respectivement sur un train 110, 120 mobile en translation transversale. Lorsque les roues 113, 123 de l'essieu sont en position déployée, cela signifie qu'elles sont situées de part et d'autre de la caisse 200 et que la remorque peut alors être attelée et tractée par un véhicule à deux roues. Lorsque les roues 113, 123 sont en position escamotée, cela signifie qu'elles sont escamotées dans leur logement respectif 214a, 214b intégré dans chaque paroi latérale 210a, 210b de la caisse 200 et que la remorque peut alors être utilisée comme un chariot.

Le châssis de la remorque comprend la partie centrale 150 fixe, sur laquelle sont fixés les deux trains 110, 120 mobiles en translation. Les deux roues sont disposées en regard l'une de l'autre et sont chacune encadrées par deux amortisseurs respectivement 111a, 111b et 121a, 121b. L'axe du moyeu de chaque roue 113, 123 est fixé respectivement sur un moyen de fixation 112, 122, tel qu'un crochet ou une mâchoire par exemple, lui-même fixé sur le train mobile 110, 120. Le moyen de fixation 112, 122 de chaque roue comprend par exemple deux parties (référencées respectivement 112a, 112b et 122a, 122b sur les Figures 5A et 5B), situées de part et d'autre de la roue, de sorte que les deux extrémités de l'axe du moyeu de chaque roue sont maintenues fixement par le moyen de fixation 112, 122.

De manière facultative, la partie externe de chaque train mobile 110, 120 encadre la roue correspondante 113, 123 et comprend des portions avant et arrière recourbées autour de chaque roue 113, 123, de manière à former un parechoc référencé respectivement 118, 128. Ainsi, les roues et le châssis sont protégés contre les chocs éventuels dus à des projections de cailloux ou autres projectiles présents sur la route.

Les deux amortisseurs 111a, 111b et 121a, 121b encadrant chaque roue 113 et 123 sont avantageusement reliés entre eux par une barre d'actionnement référencée respectivement 114, 124 montée pivotante autour d'un axe 117, 127. Dans un mode particulier de réalisation, illustré sur les Figures 5C et 5D, chaque extrémité de la barre d'actionnement 114, 124 est en outre raccordée à une bielle 119a, 119b et 129a, 129b elle-même articulée autour de l'axe 117a, 117b, 127a, 127b fixé à la caisse, dans le logement 214a, 214b prévu dans chaque paroi latérale 210a, 210b de la caisse 200. Ce mode de réalisation n'est qu'un exemple illustratif et tout autre moyen équivalant, permettant de faire pivoter la barre d'actionnement et les amortisseurs, peut être envisagé. Un moyen de rappel élastique 130a, 130b ; 131a, 131b, tel qu'un ressort de torsion, est en outre prévu pour exercer un effort sur la bielle correspondante 119a, 119b ; 129a, 129b, et sur l'axe de rotation 117a, 117b ; 127a, 127b afin de bloquer les roues dans leur position.

Chaque train mobile 110, 120 comprend en outre deux tiges respectivement 115a, 115b et 125a, 125b. En position escamotée, chaque tige 125a, 125b pénètre dans un guide 152 pratiqué dans un montant vertical 153 de la partie centrale fixe 150, de sorte que la tige rend le train mobile 120 solidaire de la partie centrale 150 fixe. De manière facultative, des moyens de rappel élastiques 116, 126, tel que des ressorts par exemple, peuvent être prévus sur chaque tige 115a, 115b et 125a, 125b, pour faciliter l'insertion de la tige dans l'orifice 152 qui lui est dédié dans un montant vertical 153 de la partie fixe 150. En position escamotée, le train mobile 110, 120 est fixe et solidaire de la partie centrale 150 fixe. Il ne peut donc pas bouger. La roue 113, 123 reste donc bloquée, fixée dans le logement 214a, 214b qui lui est dédié dans chaque paroi latérale 210a, 210b de la caisse 200.

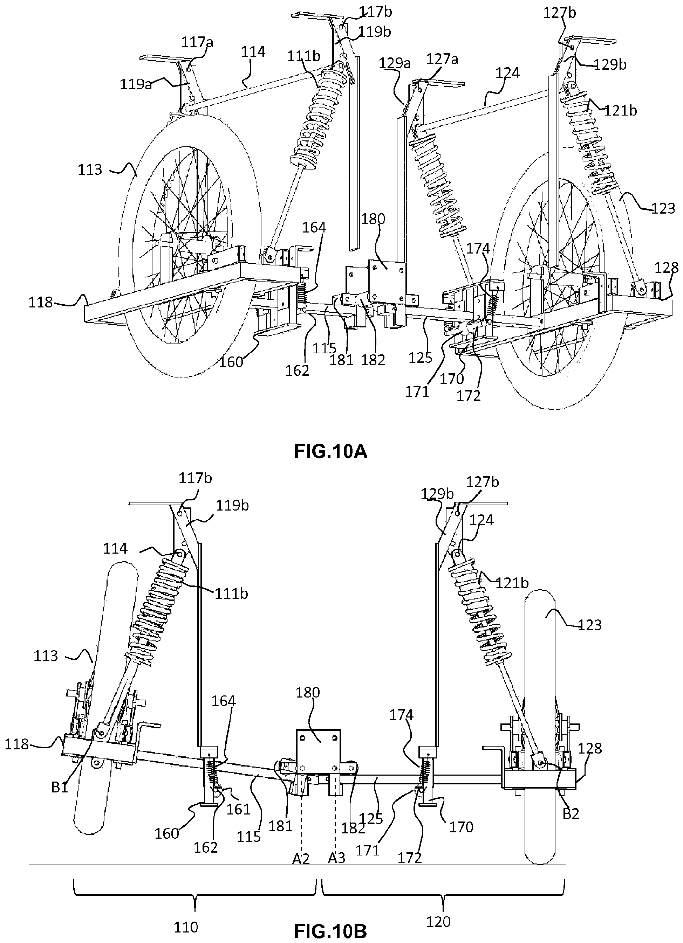

Selon une variante de réalisation, il est possible de ne prévoir qu'une seule tige pour chaque train mobile. Dans ce cas, la tige est de préférence positionnée le long d'une direction transversale médiane du châssis, passant par les axes des moyeux des roues. Cette variante est décrite plus en détails ci-dessous en regard des Figures 10A et 10B.

Pour passer de la position déployée à la position escamotée (voir notamment les Figures 5A et 5C) il faut soulever la barre d'actionnement 114, 124 tout en poussant les roues 113, 123 vers leur logement. Ainsi, au moment de l'escamotage des roues, les amortisseurs 111a, 111b et 121a, 121b reliés par la barre d'actionnement respectivement 114, 124, sont entrainés en rotation autour de leur axe de rotation B1, B2 situé sur le train mobile 110, 120 du châssis. La barre d'actionnement 114, 124 se retrouve orientée vers l'extérieur du logement 214a, 214b prévu dans chaque paroi latérale de la caisse 200. Les amortisseurs 111a, 111b et 121a, 121b sont également orientés vers l'extérieur du logement 214 et forment un angle α obtus avec le châssis. Dans ce cas, la force F1 exercée par les ressorts de torsion 130a, 130b ; 131a, 131b sur les bielles 119a, 119b, 129a, 129b a alors tendance à entrainer le train mobile 110, 120 de chaque roue vers la partie centrale 150 fixe et par conséquent à verrouiller la roue 113, 123 dans sa position escamotée.

Pour passer en position déployée, tel qu'illustré sur les Figures 5B et 5D, il faut tirer chaque train mobile vers l'extérieur, en tirant les roues par exemple, ce qui entraine un pivotement des amortisseurs 111a, 111b et 121a, 121b dans l'autre sens autour de leur axe de rotation B1, B2. Dans ce cas les amortisseurs 111a, 111b et 121a, 121b forment alors un angle β aigu avec le châssis. A la fin du mouvement de déploiement des roues, l'effort exercé par les ressorts de torsion sur les bielles 119a, 119b et 129a, 129b situées à chaque extrémité de chaque barre d'actionnement 114, 124, permet de les rabattre contre la paroi du logement 214a, 214b en les faisant pivoter autour de leur axe 117a, 117b et 127a, 127b.Le poids de la remorque permet alors de maintenir les roues bloquées dans leur position déployée.

Dans cette position déployée (voir notamment la Figures 5B et 5D) les tiges 115a, 115b et 125a, 125b de chaque train mobile 110, 120 ne sont alors plus solidaires de la partie centrale 150 fixe, si bien que les trains mobiles sont libres en rotation autour d'au moins un axe A1. De manière préférentielle, les deux trains mobiles sont mobiles en rotation autour d'un seul et même axe A1 de rotation qui s'étend selon une direction parallèle à l'axe de symétrie longitudinal du châssis. Cet axe de rotation permet ainsi à chaque train mobile d'épouser les aspérités de la route.

Selon une variante de réalisation, chaque train mobile peut être libre en rotation autour de son propre axe s'étendant selon une direction longitudinale. Dans ce cas, les deux axes de rotation sont situés de part et d'autre de l'axe de symétrie longitudinal du châssis. Cette variante est décrite en regard des Figures 10A et 10B ci-après.

Les Figures 10A à 10B illustrent la variante selon laquelle chaque train mobile 110, 120 comprend une seule tige 115, 125 positionnée le long d'une direction transversale médiane, passant par les axes des moyeux des roues. Dans ce cas, la tige 115, 125 de chaque train mobile 110, 120 coulisse dans une pièce centrale 180 équipée de moyens de guidage facilitant la translation de chaque tige 115, 125. Ces moyens de guidage sont par exemple formés de plusieurs galets 181, 182, ou de tout autre moyen équivalent comme des roulements à billes par exemple. Un jeu de galets 181 est alors dédié à une tige 115 et, positionné en regard, un deuxième jeu de galets 182 est dédié à l'autre tige 125.

Dans cette configuration, il n'est plus nécessaire de prévoir un ressort de torsion sur les bielles 119, 129 supportées par l'axe de rotation 117, 127 de la barre d'actionnement 114, 124 des roues. En revanche, une pièce, encore dénommée « fourchette » 160, 170 par la suite, prévue pour maintenir la rigidité de l'essieu, comprend un tel moyen de rappel élastique, se présentant sous la forme d'un ressort 164, 174. La fourchette comprend en outre un galet 161, 171, sur lequel la tige 115, 125 du train mobile appuie. Le moyen de rappel élastique 164, 174 est fixé sur l'axe 162, 172, portant le galet 161, 171 et permet d'exercer en permanence une force de rappel vers le haut pour maintenir le train mobile en position horizontale, quelle que soit la position déployée ou escamotée des roues. Selon cette variante, en position déployée, chaque train mobile 110, 120 est libre en rotation autour de son propre axe A2, A3 s'étendant selon une direction longitudinale, tel qu'illustré sur la Figure 10B, de sorte qu'il puisse épouser les aspérités de la route.

Le fait de pouvoir escamoter les roues 113, 123 de l'essieu permet donc de gagner en encombrement, tout en ayant une remorque présentant une hauteur importante. Ainsi, pour qu'une remorque d'une largeur de 70 cm et d'une hauteur d'1,80m soit stable lorsqu'elle est tirée par un véhicule à deux roues, il est nécessaire que les roues de l'essieu présentent un écartement d'au moins 1m pour centrer correctement le centre de gravité de la caisse 200. Lorsque la remorque est décrochée du véhicule à deux roues, et que les quatre roulettes rétractables sont en position abaissée, la stabilité de la remorque est alors assurée et les roues 113, 123 peuvent être escamotées dans leur logement 214 de sorte que l'empattement de l'essieu est alors inférieur ou égal à la largeur de la remorque. Dans ce cas, la remorque présente alors une largeur adaptée pour passer dans l'encadrement d'une porte standard dont la norme NF P 01005 est comprise entre 70 et 90 cm. De plus, cet encombrement réduit facilite le stockage de telles remorques. En effet, il est alors possible de stocker un grand nombre de remorques en les disposant côtes à côtes dans une pièce de type local commercial, d'une surface réduite par rapport à celle d'un garage qui serait nécessaire si on devait stocker le même nombre de triporteurs.

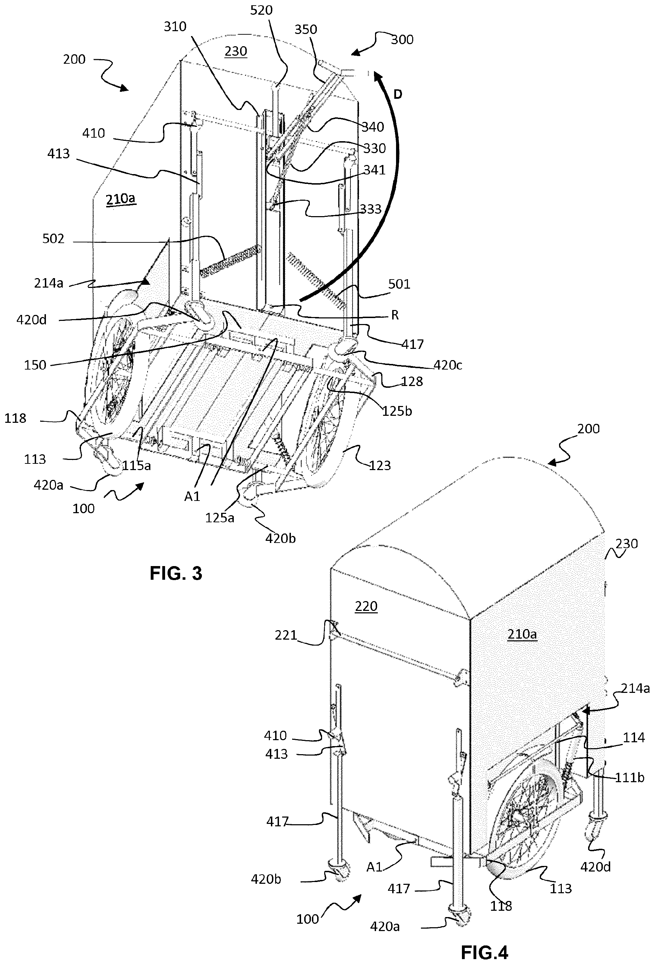

De manière avantageuse, la remorque dispose en outre d'un système d'attelage 300 qui peut être replié le long de la paroi verticale avant 230 lorsque la remorque est utilisée en tant que chariot (voir notamment Figure 2), et qui est déployé selon la flèche D sur la Figure 3 pour être accroché au véhicule à deux roues lorsque la remorque est destinée à être tractée par le véhicule (voir notamment Figure 3).

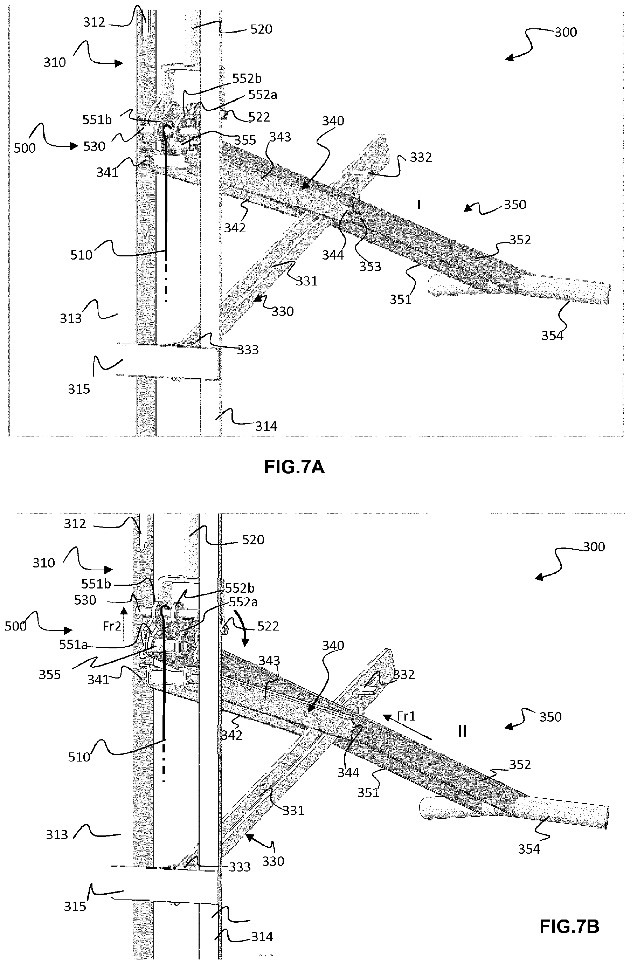

Ce système d'attelage 300, représenté plus en détails sur les Figures 7A et 7B, comprend une structure porteuse 310 comportant deux montants verticaux 313, 314 reliés entre eux par au moins une traverse 315. La structure porteuse 310 est maintenue verticale contre la paroi verticale avant 230 de la caisse 200. Elle est fixée à la paroi avant en un point R médian en bas de la caisse 200, formant un axe de rotation autour duquel la structure porteuse 310 est libre de pivoter. Ce système d'attelage 300 comprend en outre une flèche 350 formée de deux montants latéraux 351, 352 espacés et reliés entre eux, à une première extrémité, par une tête d'attelage 354 destinée à être accrochée au véhicule à deux roues. Cette tête d'attelage 354 est accrochée au véhicule à deux roues autour de l'axe de la selle et/ou du cadre. De préférence, on utilise un élément tenseur (non représenté sur les Figures) pour accrocher la tête d'attelage 354 au véhicule. Cet élément tenseur pourra par exemple être choisi parmi les éléments connus sous la marque « Sandow ». Il est de préférence élastique et souple de sorte que la flèche 350 soit maintenue fermement en translation mais soit libre en rotation autour de l'axe de la selle, de manière à faciliter la traction de la remorque dans les virages. Selon une variante, le système d'accrochage comprend deux crochets complémentaires qui s'unissent l'un avec l'autre. Un premier crochet 356 est fixé sur la tête d'attelage 354, tandis que le deuxième crochet, non représenté, est fixé sur un tube destiné à venir se placer autour de la tige de selle du véhicule à deux roues et à pouvoir tourner librement autour de la tige de selle.

Lors de son déploiement, la flèche 350 est entrainée vers le haut selon la flèche D représentée sur la Figure 3. Deux autres barres 330, 340 servent à sa fixation et à son maintien.

Une première barre 340, encore dénommée « barre équerre » dans la suite de la description, formée par deux montants latéraux 342, 343 espacés et reliés entre eux à une première extrémité par un axe de rotation 341 lui-même fixé sur les montants verticaux 313, 314 de la structure porteuse 310, permet de stabiliser la barre d'attelage. Les montants latéraux 342, 343 de cette barre équerre 340 sont en outre reliés, à une deuxième extrémité, par un axe 344, dénommé « axe de maintien » par la suite. Cette barre équerre 340 est donc fixée par son axe de rotation 341 à la structure porteuse 310 et l'écartement entre ses montants latéraux est tel qu'il est supérieur à celui des montants latéraux de la flèche 350. Ainsi, les montants latéraux 342, 343 de cette barre équerre 340 sont disposés de part et d'autre des montants latéraux de la flèche 350. Les montants latéraux de la flèche comprennent en outre chacun une rainure 353, à travers laquelle passe l'axe de maintien 344 situé à l'extrémité de la barre équerre 340. Les rainures présentent une longueur suffisante pour offrir à la flèche 350 une latitude de mouvement suffisante par rapport à l'axe de maintien 344.

Ainsi, la flèche 350 est rendue solidaire de la barre équerre 340, de sorte que lorsque l'utilisateur déploie la flèche 350 vers le haut, selon la flèche D sur la Figure 3, elle entraine la barre équerre 340 qui pivote autour de son axe de rotation 341.

Une deuxième barre 330, dénommée par la suite « tringle de verrouillage », se présente sous la forme d'une règle évidée 331 le long de son axe médian, pour former une rainure obturée aux deux extrémités. Cette tringle de verrouillage 330 est montée pivotante autour d'un axe 333 fixé à la structure porteuse 310. Elle est également montée solidaire de la barre équerre 340 et de la flèche 350, grâce à l'axe de maintien 344 de la barre équerre 340 qui traverse également la rainure 331 de cette tringle de verrouillage 330. Cette tringle de verrouillage 330 est disposée entre les montants latéraux 351, 352 de la flèche 350 et de préférence à équidistance de ces montants latéraux. Elle permet d'éviter que le système d'attelage ne retombe en position refermée le long de la paroi avant, lorsque le système d'attelage est verrouillé, et elle empêche également le basculement de la remorque vers l'avant ou l'arrière autour de son unique essieu en bloquant la rotation de la flèche 350 autour de son axe 355. La tige de verrouillage 330 garanti donc la rigidité du système d'attelage 300.

La flèche n'est donc pas directement fixée sur la structure porteuse 310, elle est reliée à elle notamment par l'intermédiaire de la barre équerre 340 et de la tringle de verrouillage 330 qui sont montées solidaires de la structure porteuse 310 par le biais de leurs axes de rotation 314, 333 respectifs.

Ainsi, lorsque l'utilisateur déploie la flèche 350 vers le haut, celle-ci entraine la barre équerre 340 qui pivote autour de son axe de rotation 341 et la tringle de verrouillage 330 qui pivote vers le haut, autour de son axe de rotation 333. L'axe de maintien 344 de la barre équerre 340 coulisse le long des rainures des montants latéraux de la flèche et de la rainure 331 de la tringle de verrouillage 330. De manière avantageuse, un moyen de verrouillage 332 est fixé sur cette tringle de verrouillage 330 afin de pouvoir maintenir la flèche verrouillée dans sa position déployée. Ainsi, il peut par exemple se présenter sous la forme d'un crochet, pour venir crocheter dans l'axe de maintien 344 solidarisant la flèche à la barre équerre 340 et à la tringle de verrouillage 330. Ce moyen de verrouillage 352 est de préférence fixé le long de la rainure 331 de la tringle de verrouillage 330. De manière avantageuse, il est fixé de manière amovible le long de cette rainure 331, au moyen d'un système de vis et d'écrou par exemple, de sorte que sa position peut être réglée et adaptée en fonction de la hauteur d'accrochage du système d'attelage 300, c'est-à-dire selon le véhicule utilisé pour tracter la remorque.

Lorsque le système d'attelage 300 est verrouillé dans sa position déployée, l'axe de maintien 344 se trouve alors en un point précis et immobile. Les rainures 353, pratiquées dans les montants latéraux 351, 352 de la flèche 350, offrent une latitude de mouvement à cette flèche qui peut coulisser vers l'avant ou vers l'arrière par rapport à cet axe de maintien 344 selon que le véhicule à deux roues avance ou freine.

Grâce à la conception de ce système d'attelage 300, le véhicule tracteur peut tirer la remorque sans équipement particulier. Il ne nécessite en effet la fixation préalable d'aucun mécanisme sous la selle ou sur le moyeu de sa roue arrière pour recevoir la tête d'attelage comme dans les systèmes existants jusqu'à présent.

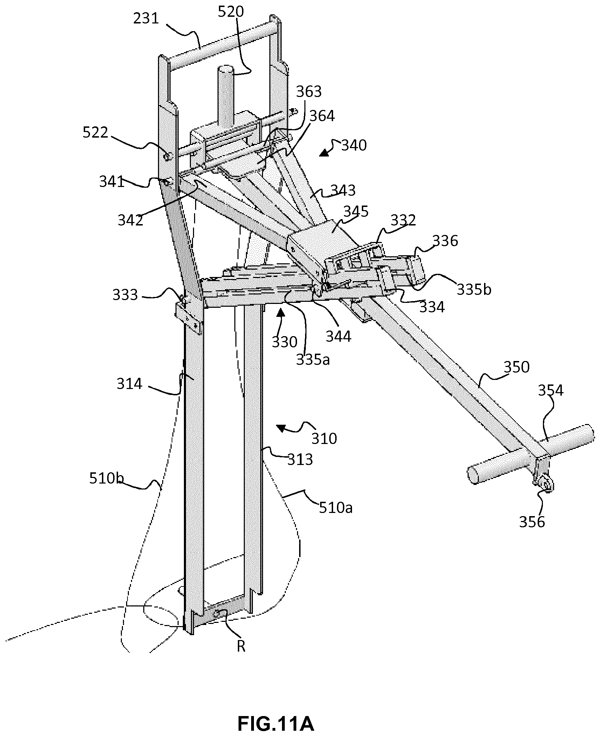

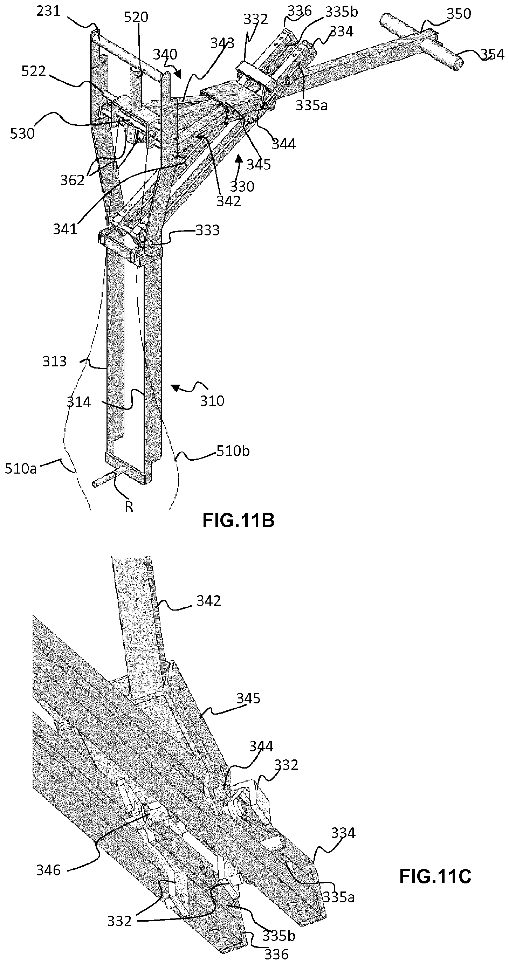

Les Figures 11A et 11B illustrent une variante de réalisation du système d'attelage 300 selon l'invention. Cette variante diffère du premier mode de réalisation en ce que la flèche 350 ne comprend qu'une seule barre, mobile en translation entre la barre équerre 340 et la tringle de verrouillage 330. La tringle de verrouillage 330 quant à elle, comprend deux montants latéraux 334, 336 disposés de part et d'autre de la flèche 350 et évidés par une rainure 335a, 335b, fermée aux deux extrémités, le long de leur axe médian. Les montants latéraux 342, 343 de la barre équerre 340 ne sont plus parallèles entre eux, mais en forme de V dont le côté le plus large forme l'axe 341 de rotation sur la structure porteuse 310. L'extrémité où se rejoignent les montants latéraux 342, 343 de la barre équerre 340 comprend une pièce 345 solidaire de l'axe 344 de maintien traversant les rainures 335a, 335b des montants latéraux 334, 336 de la tringle de verrouillage. L'axe de maintien 344 supporte au moins un galet, non visible sur les Figures 11A et 11B mais visible sur la Figure 11C et référencé 346, sur le(s) quel(s) coulisse la flèche 350 en translation. Ce galet 346 supporte le poids de la flèche 350 et facilite son mouvement de translation d'avant en arrière et réciproquement. Selon cette variante de réalisation, la flèche 350 est mobile uniquement en translation et ne risque pas de gêner le cycliste par des oscillations verticales se produisant le long de la tige de selle de la bicyclette comme dans le premier mode de réalisation.

La Figure 11C illustre plus en détails le moyen de verrouillage du système d'attelage selon cette variante de réalisation. Le moyen de verrouillage se présente sous la forme de deux crochets symétriques et en regard l'un de l'autre, disposés entre les montants latéraux 334, 336 de la tringle de verrouillage 330 et apte à crocheter les extrémités de l'axe de maintien 344 supportant le galet 346 sur lequel coulisse la flèche 350.

La Figure 3 représente la remorque 1000 et son système d'attelage 300 déployé vus en perspective. En général, les remorques existantes jusqu'à présent comprennent un système d'attelage articulé en un point bas de la remorque vers l'axe de la selle du véhicule tracteur, de sorte que les répercussions des aspérités de la route sur le véhicule tracté sont limitées. Quel que soit le mode de réalisation du système d'attelage, la remorque selon l'invention comprend un système d'attelage articulé en deux points 341 et 333 correspondants respectivement aux axes de rotation de la barre équerre 340 et de la tringle de verrouillage 330. Ces deux points d'articulation sont situés dans la moitié supérieure de la structure porteuse 310 du système d'attelage 300, à une hauteur par rapport au sol, située de part et d'autre de celle du point d'accroche sur le véhicule à deux roues. Le point le plus haut 341 se situe au même niveau ou légèrement au-dessus de la hauteur du point d'accroche du véhicule tracteur. Par conséquent, afin de limiter les répercussions des aspérités de la route sur la remorque, le système d'attelage 300 est avantageusement doté d'un système d'amortissement. Ce système d'amortissement consiste à maintenir la verticalité du système d'attelage 300, c'est-à-dire à maintenir la structure poreuse 310 du système d'attelage 300 perpendiculaire au sol, quel que soit l'état de la route (présence de nids de poule ou autre), de manière à amortir les mouvements d'oscillation de la remorque et éviter la chute du véhicule tracteur.

Le système d'amortissement peut avantageusement comprendre deux moyens de rappels élastiques, tels que des ressorts 501, 502 par exemple, disposés de part et d'autre de la structure porteuse 310 et reliés en bas de la caisse 200. Ces moyens de rappel permettent d'exercer une force sur la structure porteuse 310 pour la maintenir verticale, c'est-à-dire perpendiculaire au sol. De plus, chaque montant vertical 313, 314 de la structure porteuse 310 du système d'attelage est pourvu d'une rainure 312 à hauteur de la barre 231 de manutention de la remorque, de sorte que la barre 231 passe à travers la rainure 312 de chaque montant vertical. Ainsi, la structure porteuse 310 est libre de coulisser le long de la barre 231 lorsqu'elle pivote autour de son axe de rotation R, du fait des aspérités de la route. La barre de manutention 231 du chariot, le long de laquelle le système d'attelage 310 coulisse, permet en outre d'absorber les secousses et d'éviter que l'axe de rotation R du bas ne cède sous l'effet des vibrations.

Dans une variante de réalisation, les deux moyens de rappel élastiques 501, 502 peuvent être remplacés par un seul moyen de rappel élastique (non représenté) reliant le point médian haut de la caisse 200 au point médian haut de la structure porteuse 310.

De préférence, la remorque est dotée d'un système de freinage par inertie 500. Les Figures 7A et 7B schématisent en détails le système d'attelage 350 entre une position normale de traction (Figure 7A) et une position de freinage (Figure 7B). La flèche 350 n'est pas directement fixée sur la structure porteuse 310 du système d'attelage, elle est maintenue fixement en place grâce à la barre équerre 340 et à la tringle de verrouillage 330. En position de traction par le véhicule à deux roues (Figure 7A), la flèche 350 est donc maintenue dans une première position I autour de l'axe de maintien 344. En position de freinage (Figure 7B), c'est-à-dire lorsque le véhicule tracteur freine, la remorque exerce une pression sur la flèche 350 qui se déplace alors vers l'arrière, dans une deuxième position II, et agit sur le système de freinage par inertie 500. La présence des rainures 353 sur chacun de ses montants latéraux 351, 352 permet en effet à la flèche 350 de se déplacer vers l'arrière par rapport au point fixe formé par l'axe de maintien 344.

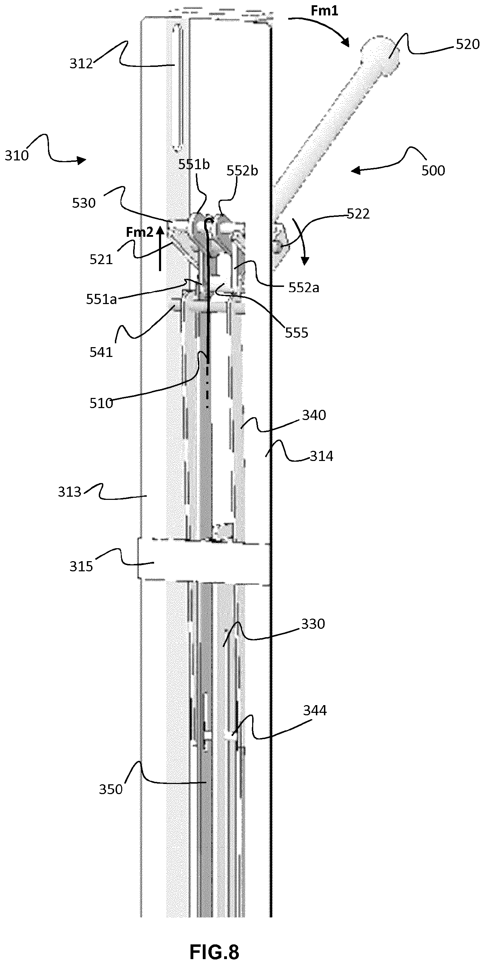

L'extrémité de la flèche 350, située du côté de la structure porteuse 310, comprend un axe 355 reliant les deux extrémités des montants latéraux 351, 352. A chaque extrémité de cet axe 355, est relié un élément en équerre apte à pivoter autour d'un axe de rotation 522. Chaque élément en équerre est matérialisé sur les Figures 7A, 7B et 8 par un système de bielles 551a, 551b ; 552a, 552b. Selon ce mode de réalisation, chaque extrémité de l'axe 355 de la flèche 350 est raccordée à une extrémité d'une première bielle 551a, 552a dont l'autre extrémité est fixée sur un axe 522 de rotation. Sur cet axe de rotation sont fixées les premières extrémités de deux autres bielles parallèles 551b, 552b dont les deuxièmes extrémités sont fixées sur une tige 530. Les premières et deuxièmes bielles 551a, 551b, 552a, 552b sont fixées de manière rigide sur l'axe de rotation 522 et sont solidaires les unes des autres. Ce système de bielles parallèles peut avantageusement être remplacé par deux éléments en équerre, chaque élément étant fabriqué d'un seul tenant, les deux éléments étant disposés parallèlement sur l'axe 355 de la flèche et étant fixés sur l'axe de rotation 522 par leur angle.

Lorsque le véhicule à deux roues freine, la pression exercée par la remorque 1000 sur le système d'attelage 300 entraine un déplacement de la flèche 350 en translation vers l'arrière, c'est-à-dire vers la remorque, les rainures 353 de chaque montant latéral 351, 352 coulissant autour de l'axe de maintien 344 de la barre équerre 340. Un tel déplacement est illustré par la flèche Fr1 sur la Figure 7B. En se déplaçant, elle entraine avec elle les éléments en équerre 551, 552 du système de freinage 500 qui pivotent autour de leur axe de rotation 522. Le pivotement des éléments en équerre autour de l'axe de rotation 522 entraine en mouvement la tige 530 qui se déplace vers le haut selon la flèche Fr2, entre une première position dite « basse » et une deuxième position dite « haute » le long des montants verticaux 313, 314 de la structure porteuse 310. Sur cette tige 530 est avantageusement attaché un câble 510 dont l'autre extrémité est fixée à un dispositif de freinage des roues 113, 123. Ce dispositif de freinage peut par exemple être choisi parmi l'un des systèmes de freinage existants suivants : frein à disques, frein à tambour ou frein à mâchoires par exemple. Par conséquent, lorsque la tige 530 se déplace vers le haut, elle entraine le câble 510 qui se tend alors et actionne le dispositif de freinage des roues 113, 123.

Lorsqu'un utilisateur veut déplacer la remorque à la main, c'est-à-dire lorsque la remorque est dételée du véhicule à deux roues, selon la distance à parcourir, la nature du sol, et la charge à déplacer l'utilisateur peut la déplacer seulement sur ses deux roues principales 113, 123, ou en combinant les deux roues principales 113, 123 avec deux roulettes qu'il abaisse, afin d'améliorer son confort. Quoiqu'il en soit, lorsque la remorque est déplacée manuellement, et que les roues principales 113, 123 ne sont pas en position escamotée, compte tenu du poids en mouvement et du profil du parcours, un frein à commande manuelle et facile d'accès peut s'avérer très utile.

C'est pourquoi, il est prévu un frein à commande manuelle 520 situé en haut de la structure porteuse 310 du système d'attelage 300 et à hauteur de la barre 231 de manutention de la remorque (voir notamment Figures 3, 7A, 7B et 8). Ce frein à commande manuelle, représenté plus en détails sur la Figure 8, s'articule autour de l'axe de rotation 522 sur lequel sont fixés les éléments en équerre 551a, 551b, 552a, 552b. Lorsque l'utilisateur se sert de ce frein 520 à commande manuelle, le système d'attelage 300 est rangé le long de la paroi avant de la remorque. Le frein 520 comprend une mâchoire 521 qui se positionne juste sous la tige 530. Ainsi, lorsque l'utilisateur souhaite actionner le frein à main 520, il l'abaisse selon la flèche Fm1 sur la Figure 8, ce qui a pour effet de le faire pivoter autour de l'axe de rotation 522 et d'entrainer la mâchoire 521 vers le haut. La mâchoire 521 entraine avec elle la tige 530 qui se déplace, selon la flèche Fm2 sur la Figure 8, de sa position basse vers sa position haute. Lorsque la tige 530 se déplace vers le haut, elle entraine avec elle l'extrémité du câble 510 qui lui est raccordé. Le câble 510 se tend alors et actionne le dispositif de freinage des roues 113, 123. De manière avantageuse, un ressort de torsion, non représenté, disposé sur son axe de rotation 522, permet de maintenir le frein 522 verticalement en position de repos.

Lorsque le système d'attelage est réalisé conformément à la variante de réalisation illustrée sur les Figures 11A et 11B, la flèche 350 est entrainée dans un mouvement de translation vers la remorque au moment du freinage du véhicule. L'extrémité arrière de la barre de flèche 350 est solidaire d'une plaque 364 disposée sur sa face supérieure et d'une tige 363 fixée sur la plaque selon son axe transversal. Lorsque la flèche 350 est entrainée en translation, son extrémité coulisse entre des galets 362 disposés sur l'axe 341 de rotation de la barre équerre 340. En reculant, la tige supérieure 363, solidaire de la flèche 350, bute contre la manette de frein 520 et la fait basculer vers l'avant autour de son axe de rotation 522. La tige 530, de la manette de frein 520, sur laquelle sont fixés des câbles de frein 510a, 510b, pivote vers le haut. Chaque câble de frein 510a, 510b est respectivement relié à un dispositif de freinage d'une roue. Le pivotement de la tige 530 vers le haut a pour effet de tendre les câbles de frein 510a, 510b et d'actionner les dispositifs de freinage des roues de la remorque.

## Revendications

1. Remorque (1000) pour véhicule à deux roues, ladite remorque comprenant une caisse (200) supportée par un châssis (100) comportant lui-même un essieu équipé de deux roues (113, 123), en regard l'une de l'autre selon une direction transverse de ladite remorque, et de quatre amortisseurs (111a, 111b ; 121a, 121b) situés respectivement de part et d'autre de chaque roue (113 ; 123), ladite remorque étant **caractérisée en ce qu'**elle comprend en outre quatre roulettes rétractables (420a, 420b ; 420c, 420d), chaque roulette étant montée sur un axe (417) mobile en translation verticale entre une première position relevée, lorsque la remorque est tractée par ledit véhicule à deux roues, et une deuxième position abaissée, en contact avec le sol, lorsque la remorque n'est pas tractée par ledit véhicule à deux roues et **en ce que**, lorsque les roulettes sont en position abaissée en contact avec le sol, leur position est telle que les roues (113 ; 123) de l'essieu ne touchent pas le sol, permettant une utilisation de la remorque en mode chariot.

2. Remorque selon la revendication 1 , **caractérisée en ce que** chaque roue est montée sur un train (110, 120) mobile en translation transversale, de sorte que l'écartement entre les deux roues varie entre une première position déployée, dans laquelle les deux roues (113, 123) sont écartées de part et d'autre de ladite caisse (200), et une deuxième position escamotée dans laquelle chaque roue (113, 123) est escamotée dans un logement (214a, 214b) prévu dans chaque paroi latérale (210a, 210b) de ladite caisse (200).

3. Remorque selon la revendication 2, **caractérisée en ce qu'**en position déployée, chaque train mobile (110, 120) est libre en rotation autour d'un axe (A1, A2, A3) s'étendant selon une direction longitudinale du châssis (100).

4. Remorque selon la revendication 2, **caractérisée en ce qu'**en position escamotée, les trains mobiles (110, 120) sont maintenus solidaires d'une portion centrale (150, 180) fixe du châssis par l'intermédiaire d'au moins une tige de maintien (115, 115a, 115b ; 125, 125a, 125b).

5. Remorque selon l'une des revendications 2 à 4, **caractérisée en ce que** pour passer d'une position déployée à une position escamotée et inversement, les deux amortisseurs (111a, 111b et 121a, 121b) de chaque roue (113, 123) sont reliés entre eux par une barre d'actionnement (114, 124) montée pivotante autour d'un axe (117a, 117b; 127a, 127b), et des moyens de rappel élastique (130a, 130b ; 131a, 131b) exercent une force de rappel sur ledit axe afin de maintenir les roues dans leur position escamotée ou déployée.

6. Remorque selon la revendication 4, **caractérisé en ce que** pour passer d'une position déployée à une position escamotée et inversement, les deux amortisseurs (111a, 111b et 121a, 121b) de chaque roue (113, 123) sont reliés entre eux par une barre d'actionnement (114, 124) montée pivotante autour d'un axe (117a, 117b; 127a, 127b), et la tige (115 ; 125) de chaque train mobile coulisse dans la partie centrale (180) équipée de galets (181, 182) et est maintenue en position horizontale au moyen d'une fourchette (160, 170) équipée d'un galet (161, 171) sur lequel appuie la tige (115, 125).

7. Remorque selon l'une quelconque des revendications précédentes, **caractérisée en ce qu'**elle comprend en outre un système d'attelage (300) audit véhicule à deux roues, et **en ce que** ledit système d'attelage pivote autour de deux axes de rotation (333, et 341) entre une position rangée le long de la paroi verticale avant (230) de la caisse (200) et une position déployée, lesdits axes de rotation (341, 333) étant à une hauteur située respectivement de part et d'autre de la hauteur du point de fixation sur le véhicule à deux roues.

8. Remorque selon la revendication 7, **caractérisée en ce que** le système d'attelage (300) comprend :
- une structure porteuse (310) comportant des montants verticaux (313, 314) et maintenue verticale le long de la paroi avant (230) de la caisse (200),
- une flèche (350) formée de deux montants latéraux (351, 352) dotés chacun d'une rainure (353) et reliés entre eux à une première extrémité par une tête d'attelage (354) et à une autre extrémité par un axe (355),
- une tringle de verrouillage (330) montée pivotante autour d'un axe (333) fixé à la structure porteuse (310) et apte à être déployée vers le haut avec la flèche (350), ladite tringle de verrouillage se plaçant entre les montants latéraux (351, 352) de ladite flèche (350) et étant en outre pourvue d'une rainure centrale (331),
- une barre équerre (340) formée par deux montants latéraux (342, 343) disposés de part et d'autre des montants latéraux (351, 352) de la flèche (350) et reliés entre eux, à une première extrémité, par un axe de rotation (341) fixé à la structure porteuse (310) et, à une deuxième extrémité, par un axe de maintien (344) passant à travers la rainure (353) pratiquée dans chacun des montants latéraux (351, 352) de la flèche (350) et dans la rainure (331) de la tringle de verrouillage (330), de sorte que la flèche (350), la barre équerre (340) et la tringle de verrouillage (330) sont montées solidaires les unes des autres,
- un moyen de verrouillage (332), fixé sur la tringle de verrouillage (330), apte à s'accrocher sur l'axe de maintien (344) pour maintenir la flèche en position déployée.

9. Remorque selon la revendication 7, **caractérisée en ce que** le système d'attelage (300) comprend :
- une structure porteuse (310) comportant des montants verticaux (313, 314) et maintenue verticale le long de la paroi avant (230) de la caisse (200),
- une flèche (350) formée d'une barre dont une extrémité comprend une tête d'attelage (354),
- une tringle de verrouillage (330) montée pivotante autour d'un axe (333) fixé à la structure porteuse (310) et apte à être déployée vers le haut avec la flèche (350), ladite tringle de verrouillage comprenant des montants latéraux (334, 336) disposés de part et d'autre de la flèche (350) et pourvus d'une rainure centrale (335a, 335b),
- une barre équerre (340) formée par deux montants latéraux (342, 343) disposés de part et d'autre de la flèche (350) et reliés entre eux, à une première extrémité, par un axe de rotation (341) fixé à la structure porteuse (310) et, à une deuxième extrémité, par un axe de maintien (344) passant à travers la rainure (335a, 335b) pratiquée dans chacun des montants latéraux (334, 336) de la tringle de verrouillage (330), la flèche coulissant sur un galet (346) supporté par ledit axe de maintien (344), de sorte que la flèche (350), la barre équerre (340) et la tringle de verrouillage (330) sont montées solidaires les unes des autres,
- un moyen de verrouillage (332), fixé sur la tringle de verrouillage (330), apte à s'accrocher sur l'axe de maintien (344) pour maintenir la flèche en position déployée.

10. Remorque selon la revendication 8 ou 9, **caractérisée en ce que** le moyen de verrouillage est fixé le long de la (des) rainure(s) de la tringle de verrouillage et sa position est réglable et adaptée à la hauteur d'accroche sur ledit véhicule à deux roues.

11. Remorque selon l'une des revendications 7 à 10, **caractérisée en ce qu'**elle comprend en outre un système d'amortissement (501, 502) apte à maintenir la structure porteuse (310) du système d'attelage (300) perpendiculaire au sol.

12. Remorque selon l'une quelconque des revendications 7 à 11, **caractérisé en ce que** la flèche (350) agit, à son extrémité arrière, sur un système de freinage (500) par inertie.

13. Remorque selon la revendication 12, **caractérisé en ce qu'**elle est en outre équipée d'un frein à commande manuelle (520) agissant sur le système de freinage (500) par inertie.

## Patentansprüche

1. Anhänger (1000) für ein Zweiradfahrzeug, wobei der Anhänger einen Kastenaufbau (200) aufweist, der von einem Fahrgestell (100) getragen wird, das selbst eine Achse aufweist, die mit zwei Rädern (113, 123) ausgestattet ist, die einander in Querrichtung des Anhängers gegenüberliegen, und vier Stoßdämpfer (111a, 111b; 121a, 121b), die jeweils auf beiden Seiten jedes Rades (113; 123) angeordnet sind, wobei der Anhänger **dadurch gekennzeichnet ist, dass** er ferner vier versenkbare Rollen (420a, 420b; 420c, 420d) umfasst, wobei jede Rolle auf einer mobilen Achse (417) montiert ist, die sich senkrecht zwischen einer ersten angehobenen Position, wenn der Anhänger von dem Zweiradfahrzeug gezogen wird, und einer zweiten in Kontakt mit dem Boden stehenden abgesenkten Position bewegt, wenn der Anhänger nicht von dem Zweiradfahrzeug gezogen wird, und dass, wenn die Rollen in Bodenkontakt abgesenkt sind, ihre Position so ist, dass die Räder (113; 123) der Achse den Boden nicht berühren, so dass der Anhänger im Chariot-Modus verwendet werden kann.

2. Anhänger nach Anspruch 1, **dadurch gekennzeichnet, dass** jedes Rad so auf einem quer beweglichen Gestänge (110, 120) montiert ist, dass der Abstand zwischen den beiden Rädern variiert zwischen einer ersten ausgefahrenen Position, in der die beiden Räder (113, 123) auf beiden Seiten des Kastenaufbaus (200) getrennt sind, und einer zweiten eingefahrenen Position, in der jedes Rad (113, 123) in eine Aufnahme (214a, 214b) eingefahren ist, die in jeder Seitenwand (210a, 210b) des Kastenaufbaus (200) vorgesehen ist.

3. Anhänger nach Anspruch 2, **dadurch gekennzeichnet, dass** in der ausgefahrenen Position jedes bewegliche Gestänge (110, 120) um eine Achse (A1, A2, A3) frei drehbar ist, die sich in Längsrichtung des Fahrgestells (100) erstreckt.

4. Anhänger nach Anspruch 2, **dadurch gekennzeichnet, dass** in eingefahrener Position das bewegliche Gestänge (110, 120) vermittels zumindest einer Haltestange (115, 115a, 115b; 125, 125a, 125b) fest mit einem feststehenden Mittelabschnitt (150, 180) des Fahrgestells verbunden ist.

5. Anhänger nach einem der Ansprüche 2 bis 4, **dadurch gekennzeichnet, dass** die beiden Stoßdämpfer (111a, 111b und 121a, 121b) jedes Rades (113, 123), um von einer ausgefahrenen zu einer eingezogenen Position zu gelangen und umgekehrt durch eine Betätigungsstange (114, 124) miteinander verbunden sind, die um eine Achse (117a, 117b; 127a, 127b) schwenkbar montiert ist, und elastische Rückstellmittel (130a, 130b; 131a, 131b) eine Rückstellkraft auf die Achse ausüben, um die Räder in ihrer eingezogenen oder ausgefahrenen Position zu halten.

6. Anhänger nach Anspruch 4, **dadurch gekennzeichnet, dass** die beiden Stoßdämpfer (111a, 111b und 121a, 121b) jedes Rades (113, 123), um von einer ausgefahrenen zu einer eingezogenen Position zu gelangen und umgekehrt durch eine Betätigungsstange (114, 124) miteinander verbunden sind, die schwenkbar um eine Achse (117a, 117b; 127a, 127b) montiert ist, und die Stange (115; 125) jedes beweglichen Gestänges in dem mit Laufrollen (181, 182) ausgestatteten Mittelteil (180) gleitet und mittels einer Gabel (160, 170), die mit einer Laufrolle (161, 171) ausgestattet ist, auf der die Stange (115, 125) abgestützt ist, in horizontaler Position gehalten wird.

7. Anhänger nach einem der vorstehenden Ansprüche, **dadurch gekennzeichnet, dass** er ferner ein Kupplungssystem (300) für das Zweiradfahrzeug umfasst, und dadurch, dass das Kupplungssystem um zwei Drehachsen (333 und 341) zwischen einer entlang der senkrechten Vorderwand (230) des Kastenaufbaus (200) angeordneten Position und einer ausgefahrenen Position schwenkt, wobei sich die Drehachsen (341, 333) in einer Höhe jeweils auf beiden Seiten der Höhe des Befestigungspunktes am Zweiradfahrzeugs befinden.

8. Anhänger nach Anspruch 7, **dadurch gekennzeichnet, dass** das Kupplungssystem (300) Folgendes umfasst:
eine Tragstruktur (310), die senkrechte Ständer (313, 314) umfasst und senkrecht entlang der Vorderwand (230) des Kastenaufbaus (200) gehalten wird,
einen Ausleger (350), der aus zwei Seitenständern (351, 352) gebildet wird, die jeweils mit einer Nut (353) versehen sind und zusammen mit einem ersten Ende durch einen Kupplungskopf (354) und mit einem anderen Ende durch eine Achse (355) verbunden sind,
ein Sperrgestänge (330), das schwenkbar um eine Achse (333) montiert ist, die an der Tragstruktur (310) befestigt ist und mit dem Ausleger (350) nach oben ausgefahren werden kann, wobei das Sperrgestänge zwischen den Seitenständern (351, 352) des Auslegers (350) platziert und ferner mit einer zentralen Nut (331) versehen ist,
eine Winkelstange (340), die aus zwei Seitenständern (342, 343) gebildet ist, die auf beiden Seiten der Seitenständer (351, 352) des Auslegers (350) angeordnet sind und zusammen mit einem ersten Ende durch eine Drehachse (341) verbunden sind, die an der Tragstruktur (310) befestigt ist, und an einem zweiten Ende durch eine Halteachse (344), die durch die Nut (353) geht, die in jedem der Seitenständer (351, 352) des Auslegers (350) und in der Nut (331) des Sperrgestänges (330) verläuft, so dass der Ausleger (350), die Winkelstange (340) und das Sperrgestänge (330) fest miteinander verbunden montiert sind,
ein Sperrmittel (332), das am Sperrgestänge (330) befestigt ist, das geeignet ist, sich an die Halteachse (344) zu hängen, um den Ausleger in ausgefahrener Position zu halten.

9. Anhänger nach Anspruch 7, **dadurch gekennzeichnet, dass** das Kupplungssystem (300) Folgendes umfasst:
eine Tragstruktur (310), die senkrechte Ständer (313, 314) umfasst und senkrecht entlang der Vorderwand (230) des Kastenaufbaus (200) gehalten wird,
einen Ausleger (350), der aus einer Stange gebildet ist, von der ein Ende einen Kupplungskopf (354) aufweist,
ein Sperrgestänge (330), das schwenkbar um eine Achse (333) montiert ist, die an der Tragstruktur (310) befestigt ist und mit dem Ausleger (350) nach oben ausgefahren werden kann, wobei das Sperrgestänge Seitenständer (334, 336) umfasst, die zu beiden Seiten des Auslegers (350) angeordnet und mit einer zentralen Nut (335a, 335b) versehen sind,
eine Winkelstange (340), die aus zwei Seitenständern (342, 343) gebildet ist, die auf beiden Seiten des Auslegers (350) angeordnet sind und zusammen mit einem ersten Ende durch eine Drehachse (341) verbunden sind, die an der Tragstruktur (310) befestigt ist, und an einem zweiten Ende durch eine Halteachse (344), die durch die Nut (335a, 335b) geht, die in jedem der Seitenständer (334, 336) des Sperrgestänges (330) verläuft, wobei der Ausleger (350) auf einer Laufrolle (346) gleitet, die von der Halteachse (344) gestützt wird, so dass der Ausleger (350), die Winkelstange (340) und das Sperrgestänge (330) fest miteinander verbunden montiert sind,
ein Sperrmittel (332), das am Sperrgestänge (330) befestigt ist, das geeignet ist, sich an die Halteachse (344) zu hängen, um den Ausleger in ausgefahrener Position zu halten.

10. Anhänger nach Anspruch 8 oder 9, **dadurch gekennzeichnet, dass** das Sperrmittel entlang der (den) Nut(en) des Sperrgestänges befestigt ist und seine Position einstellbar und an die Anhängehöhe des Zweiradfahrzeugs angepasst ist.

11. Anhänger nach einem der Ansprüche 7 bis 10, **dadurch gekennzeichnet, dass** er ferner ein Stoßdämpfersystem (501, 502) umfasst, das geeignet ist, die Tragstruktur (310) des Kupplungssystems (300) senkrecht zum Boden zu halten.

12. Anhänger nach einem der Ansprüche 7 bis 11, **dadurch gekennzeichnet, dass** der Ausleger (350) an seinem hinteren Ende auf ein Bremssystem (500) durch Trägheit einwirkt.

13. Anhänger nach Anspruch 12, **dadurch gekennzeichnet, dass** er ferner mit einer Handbremse (520) ausgerüstet ist, die durch Trägheit auf das Bremssystem (500) einwirkt.

## Claims

1. A trailer (1000) for two-wheeled vehicle, said trailer comprising a box (200) supported by a chassis (100) itself including an axle equipped with two wheels (113, 123), facing one another in a direction transverse of said trailer, and four shock absorbers (111a, 111b; 121a, 121b) situated respectively on either side of each wheel (113; 123), said trailer being **characterized in that** it further comprises four retractable casters (420a, 420b; 420c, 420d), each caster being mounted on an axis (417) movable in vertical translation between a first raised position, when the trailer is towed by said two-wheeled vehicle, and a second lowered position, in contact with the ground, when the trailer is not towed by said two-wheeled vehicle and **in that**, when the casters are in the lowered position in contact with the ground, their position is such that the wheels (113; 123) of the axle do not touch the ground, allowing use of the trailer as a cart.

2. The trailer according to claim 1, **characterized in that** each wheel is mounted on a train (110, 120) movable in transverse translation so that the spacing between the two wheels varies between a first deployed position, in which the two wheels (113, 123) are spaced on either side of said box (200), and a second retracted position in which each wheel (113; 123) is retracted into a housing (214a, 214b) provided in each side wall (210a, 210b) of said box (200).

3. The trailer according to claim 2, **characterized in that**, in the deployed position, each movable train (110, 120) is free to rotate about an axis (A1, A2, A3) extending in a longitudinal direction of the chassis (100).

4. The trailer according to claim 2, **characterized in that**, in the retracted position, the movable trains (110, 120) are held integral with a fixed central portion (150, 180) of the chassis by means of at least one holding rod (115, 115a, 115b; 125, 125a, 125b).

5. The trailer according to one of claims 2 to 4, **characterized in that**, to pass from a deployed position to a retracted position and vice versa, the two shock absorbers (111a, 111b and 121a, 121b) of each wheel (113, 123) are interconnected by an actuating bar (114, 124) pivotally mounted about an axis (117a, 117b; 127a, 127b), and elastic return means (130a, 130b; 131a, 131b) exert a return force on said axis to hold the wheels in their retracted or deployed position.

6. The trailer according to claim 4, **characterized in that**, to pass from a deployed position to a retracted position and the reverse, the two shock absorbers (111a, 111b and 121a, 121b) of each wheel (113, 123) are interconnected by an actuating bar (114, 124) pivotally mounted about an axis (117a, 117b; 127a, 127b), and the rod (115; 125) of each movable train slides in the central portion (180) equipped with rollers (181, 182) and is held in the horizontal position by means of a fork (160, 170) equipped with a roller (161, 171) on which the rod presses (115, 125).

7. The trailer according to any one of the preceding claims, **characterized in that** it further comprises a system (300) for coupling to said two-wheeled vehicle, and **in that** said coupling system pivots about two axes of rotation (333, and 341) between a stowed position along the vertical front wall (230) of the box (200) and a deployed position, said axes of rotation (341, 333) being at a height situated respectively on either side of the height of the attachment point on the two-wheeled vehicle.

8. The trailer according to claim 7, **characterized in that** the coupling system (300) comprises:
a support structure (310) including vertical posts (313, 314) and held vertical along the front wall (230) of the box (200),
a boom (350) formed of two side posts (351, 352) each provided with a groove (353) and interconnected at a first end by a coupling head (354) and at another end by an axis (355),
a locking bar (330) pivotally mounted about an axis (333) attached to the support structure (310) and capable of being deployed upward with the boom (350), said locking bar placing itself between the side posts (351, 352) of said boom (350) and being further provided with a central groove (331),
an angle bracket (340) formed by two side posts (342, 343) disposed on either side of the side posts (351, 352) of the boom (350) and interconnected, at a first end, by an axis of rotation (341) attached to the support structure (310) and, at a second end, by a retaining axis (344) passing through the groove (353) provided in each of the side posts (351, 352) of the boom (350) and in the groove (331) of the locking bar (330), so that the boom (350), the angle bracket (340) and the locking bar (330) are mounted integral with one another,
a locking means (332), attached to the locking bar (330), capable of fastening itself to the retaining axis (344) to hold the boom in the deployed position.

9. The trailer according to claim 7, **characterized in that** the coupling system (300) comprises:
a support structure (310) including vertical posts (313, 314) and held vertical along the front wall (230) of the box (200),
a boom (350) formed of a bar whereof one end comprises a coupling head (354),
a locking bar (330) pivotally mounted about an axis (333) attached to the support structure (310) and capable of being deployed upward with the boom (350), said locking bar comprising side posts (334, 336) disposed on either side of the boom (350) and provided with a central groove (335a, 335b),
an angle bracket (340) formed by two side posts (342, 343) disposed on either side of the boom (350) and interconnected, at a first end, by an axis of rotation (341) attached to the support structure (310) and, at a second end, by a retaining axis (344) passing through the groove (335a, 335b) provided in each of the side posts (334, 336) of the locking bar (330), the boom sliding on a roller (346) supported by said retaining axis (344), so that the boom (350), the angle bracket (340) and the locking bar (330) are mounted integral with one another,
a locking means (332), attached to the locking bar (330), capable of fastening itself to the retaining axis (344) to hold the boom in the deployed position.

10. The trailer according to claim 8 or 9, **characterized in that** the locking means is attached along the groove(s) of the locking bar and its position is adjustable and suitable to the coupling height of said two-wheeled vehicle.

11. The trailer according to one of claims 7 to 10, **characterized in that** it further comprises a shock absorber system (501, 502) capable of holding the support structure (310) of the coupling system (300) perpendicular to the ground.

12. The trailer according to any one of claims 7 to 11, **characterized in that** the boom (350) acts, at its rear end, on an inertia braking system (500).

13. The trailer according to claim 12, **characterized in that** it is further equipped with a manually controlled brake (520) acting on the inertia braking system (500).
